# EUROPÄISCHE PATENTSCHRIFT

(11) **EP 0 641 599 B1**
(45) Veröffentlichungstag und Bekanntmachung des Hinweises auf die Patenterteilung: **19.05.1999**
(21) Anmeldenummer: 94113751.5
(22) Anmeldetag: 02.09.1994
(51) Int. Cl.: B01L 3/02, G01F 3/00, G01B 11/08

(54) **Verfahren und Vorrichtung zur Dosierung von Flüssigkeiten**
Method and device for measuring the volume of liquids
Procédé et dispositif de mesure d'un volume de liquide

(30) Priorität: 08.09.1993 DE 4330412
(43) Veröffentlichungstag der Anmeldung: 08.03.1995
(73) Patentinhaber: Roche Diagnostics GmbH, 68298 Mannheim (DE)
(72) Erfinder: Krause, Friedemann, Dr., D-82377 Penzberg (DE); Klose, Sigmar, Dr., D-82335 Berg (DE)

(56) Entgegenhaltungen:
- WO-A-86/06832
- WO-A-90/05910
- WO-A-93/09407
- GB-A- 2 092 758
- GB-A- 2 187 549
- GB-A- 2 259 568
- US-A- 3 164 304
- US-A- 4 041 995
- US-A- 4 328 801
- US-A- 4 345 028
- US-A- 4 441 532
- PATENT ABSTRACTS OF JAPAN vol. 11, no. 68 (P-553) (2515) 28. Februar 1987 & JP-A-61 231 461 (FUJI)
- PATENT ABSTRACTS OF JAPAN vol. 8, no. 265 (P-318) (1702) 5. Dezember 1984 & JP-A-59 135 306 (TORAY)

## Beschreibung

Die vorliegende Erfindung betrifft ein Verfahren und eine Vorrichtung zur Dosierung von Flüssigkeiten, bei denen das Volumen eines Probetropfens durch eine optische Vermessung bestimmt wird.

Die Erfindung liegt im Bereich der Dosierung von Flüssigkeiten für chemische und klinische Analysen. Ein Fachmann für dieses Gebiet ist dementsprechend ein Physiker oder Physikochemiker, der Dosierungsverfahren des Standes der Technik kennt und ebenfalls mit optischen Vorrichtungen vertraut ist.

Im Stand der Technik sind Verfahren bekannt, bei denen Flüssigkeiten aus hochpräzisen Kolben, sogenannten Dilutern, abgegeben werden. Flüssigkeitsmengen, die im Bereich weniger Mikroliter liegen, können hingegen mit sogenannten Mikropipetten dosiert werden. Eine weitere Methode, mit der Flüssigkeiten im Mikroliterbereich dosiert werden können, wird in der Deutschen Patentanmeldung mit dem Aktenzeichen P 4243247.2 (äquivalent zu US-5,463,228) beschrieben. Bei diesem Verfahren wird die Höhe von Flüssigkeiten in einem Kapillarrohr durch ein elektrooptisches Element detektiert und unterschiedliche Flüssigkeitsstände im Kapillarrohr in dosierte Volumina umgerechnet. Dieses Verfahren beschäftigt sich mit der optischen Detektion des Flüssigkeitsmeniskus, um eine hinreichend genaue Dosierung zu gewährleisten.

Diese im Stand der Technik: bekannten Verfahren besitzen daher den Nachteil, daß nur Flüssigkeitsmengen ab ca. 1 µl dosiert werden können. Außerdem sind die mit der Flüssigkeit in Kontakt kommenden Geräteteile relativ aufwendig und teuer, so daß sie nach einmaliger Benutzung nicht ohne weiteres verworfen werden können.

In den Dokumenten GB 2 259 568, US-4,328,801 sowie WO 93/09407 sind weiterhin Vorrichtungen beschrieben, bei denen das Volumen eines aus einem Rohr oder einer Düse austretenden Tropfens optisch vermessen wird, während der Tropfen an der Austrittsöffnung des Rohres bzw. der Düse hängt.

Die Aufgabe der Erfindung war es, ein Verfahren und eine Vorrichtung zur Dosierung von Flüssigkeiten zur Verfügung zu stellen, mit denen auch Flüssigkeitsvolumina, die kleiner als 1 µl sind, zuverlässig und präzise dosiert werden können. Außerdem war es Aufgabe der Erfindung, eine Kontamination der Dosierungsvorrichtung auszuschließen.

Ein erfindungsgemäßes Verfahren zur Dosierung von Flüssigkeiten umfaßt die folgenden Schritte:
a) einen Konaktierungsschritt, bei dem ein Transferelement mit der Flüssigkeit derart in Kontakt gebracht wird, daß ein Tropfen der Flüssigkeit an dem Transferelement haftet,
b) einen Abbildungsschritt, bei dem der Tropfen und zumindest ein Teil des Transferelementes beleuchtet werden und durch ein optisches System mindestens ein Bild des Tropfens und eines Teiles des Transferelementes auf einen optischen Sensor abgebildet werden,
c) einen optischen Meßschritt, bei dem aus dem mindestens einen Bild, das auf den optischen Sensor abgebildet wurde, Konturen des Tropfens ermittelt werden und aus den ermittelten Konturen das Volumen des Tropfens berechnet wird,
d) einen Transferschritt, bei dem der an dem Transferelement anhaftende Tropfen in ein Analysegefäß überführt wird.

Außerdem betrifft die Erfindung ein System zur Dosierung von Flüssigkeiten gemäß Anspruch 10 mit dem das Volumen eines Flüssigkeitstropfens optisch bestimmt wird.

Das erfindungsgemäße Verfahren beschäftigt sich mit der Dosierung sehr kleiner Flüssigkeitsmengen im Bereich von wenigen Nanolitern bis hin zu Mikrolitern. Unter Dosierung ist im Rahmen dieser Erfindung nicht die Abgabe einer vorausbestimmten Flüssigkeitsmenge in ein Analysegefäß zu verstehen, sondern die Zugabe einer Flüssigkeitsmenge, die zunächst im wesentlichen nicht vorausbestimmbar ist, die jedoch vor dem Einbringen in das Analysegefäß mit großer Genauigkeit bestimmt werden kann. Im Rahmen der Analyse von Flüssigkeiten bedeutet dies in der Regel keine Einschränkung. Bekannte Analyseverfahren sind bezüglich der Probenmengen relativ flexibel. Die Genauigkeit der Analyse ist jedoch direkt von der Genauigkeit abhängig, mit der die dosierte Probenmenge bestimmt werden kann.

Bei einem erfindungsgemäßen Verfahren wird die zu dosierende Flüssigkeit mit einem Transferelement in Kontakt gebracht. Dies kann z. B. erfolgen, indem das Transferelement in die zu dosierende Flüssigkeit eingetaucht und nachfolgend herausgezogen wird. Die an dem Transferelement anhaftende Flüssigkeit stellt das Probenvolumen dar, das in das Analysegefäß gegeben werden kann. Die Flüssigkeit kann jedoch auch direkt auf ein Transferelement aufgegeben werden, auf dem sie dann durch Adhäsion und/oder Gravitationskräfte haftet.

Entsprechend diesen unterschiedlichen Möglichkeiten, Flüssigkeiten mit dem Transferelement in Kontakt zu bringen, kann das Transferelement als solches mannigfaltige Formgestaltungen besitzen. Das Transferelement kann beispielsweise die Form eines stabförmigen Körpers besitzen, der in die zu dosierende Flüssigkeit eingetaucht wird und an dessen benetzter Stirnseite Flüssigkeit in Form eines Tropfens haften bleibt. Durch Variation der Form der Stirnseite des Transferelementes können die Flüssigkeitsmengen beeinflußt werden, die dosiert werden sollen. Die Menge anhaftender Flüssigkeit hängt weiterhin von der Oberflächenbeschaffenheit des Transferelementes und Eigenschaften der Flüssigkeit, z. B. ihrer Viskosität, ab. In einer bevorzugten Ausführungsform ist das stabförmige Transferelement eine Faser. Als Materialien kommen beispielsweise Gläser, Kunststoffe, wie z. B. Polyethylen, Polypropylen, Polymethylmetacrylat, Polyethylentherephthalat, Metalle und Legierungen in Frage. Ein erfindungsgemäß besonders günstiges Transferelement ergibt sich, wenn die Mantelfläche des stabförmigen Körpers nur geringe Adhäsionskräfte auf die zu dosierende Flüssigkeit ausübt, dagegen die Stirnfläche gute Adsorptionseigenschaften besitzt. Durch diese Ausführungsform kann erreicht werden, daß der an der Stirnfläche des Transferelementes verbleibende Tropfen nicht an den Wandungen des Transferelementes adsorbiert wird und eine Volumenbestimmung erschwert. Erfindungsgemäße Transferelemente in Stäbchenform können dadurch gewonnen werden, daß längere Fasern zerschnitten, abgebrannt oder auf andere Weise durchtrennt werden. Besonders bevorzugt ist es, eine Beschichtung des Transferelementes vorzunehmen, wie dies beispielsweise vom Fraunhofer Institut (Material Science Monographs, 67, Seite 203 ff., 1991) beschrieben wird. Wird ein Material für das Transferelement verwendet, das eine starke Adsorption von Probenflüssigkeit aufweist, so kann das Transferelement äußerlich mit einem flüssigkeitsabweisenden Film beschichtet werden. Wird ein solches faserförmiges Transferelement durchtrennt, so weist es auf der Schnittkante eine Fläche mit guter Adsorption (in der Regel hydrophil) und auf der Mantelfläche eine geringe Adsorption (in der Regel hydrophob) auf.

Bei einer weiteren bevorzugten Ausführungsform besitzt das Transferelement ein ebenes Flächenelement, das größer ist als der zu dosierende Tropfen der Flüssigkeit. Erfindungsgemäß können Folien aus Kunststoffen, Glas oder Metall eingesetzt werden. Vorteilhaft sind solche Materialien, die für Licht zumindest zum Teil durchlässig sind. Es ist ebenfalls vorteilhaft, wenn die Oberfläche des Transferelementes flüssigkeitsabweisend ist, da sich in diesem Falle ein kugelförmiger Tropfen ergibt, und kein Zerlaufen der Flüssigkeit auf der Oberfläche stattfindet. Physikalisch lassen sich hydrophobe Oberflächenmaterialien daran erkennen, daß wässrige Flüssigkeitströpfchen auf ihnen einen hohen Randwinkel ausbilden. Für diese Anwendung geeignete Kunststoffe sind beispielsweise Polyvinylidenfluorid (Teflon), Polyethylen, Polypropylen und Polymethylmetacrylat. Oberflächen, die nur eine geringe Hydrophobie aufweisen, können durch Beschichtung mit z. B. Organosilanen imprägniert werden.

Die Bestimmung des an dem Transferelement anhaftenden Flüssigkeitsvolumens erfolgt erfindungsgemäß durch eine optische Vermessung der Konturen der adsorbierten Flüssigkeit. Bevorzugt findet zunächst eine Vermessung der Konturen des Transferelementes ohne Flüssigkeit statt, um das von der Flüssigkeit eventuell eingehüllte Volumen des Transferelementes mit in die Berechnung einbeziehen zu können.

Zur optischen Vermessung wird das Transferelement beleuchtet und der Beleuchtungsstrahl nach Passieren des Transferelementes auf einen optischen Sensor geleitet. Da die erfindungsgemäßen Probenvolumina und damit verbundene Flüssigkeitstropfen im Größenbereich von Millimetern und darunter liegen, treten bei der Beleuchtung starke Beugungserscheinungen auf. Für die Bestimmung des Volumens müssen die Konturen des Tropfens mit hoher Genauigkeit ermittelt werden, daher müssen die Beugungserscheinungen mit in die Ermittlung der Konturen einbezogen werden.

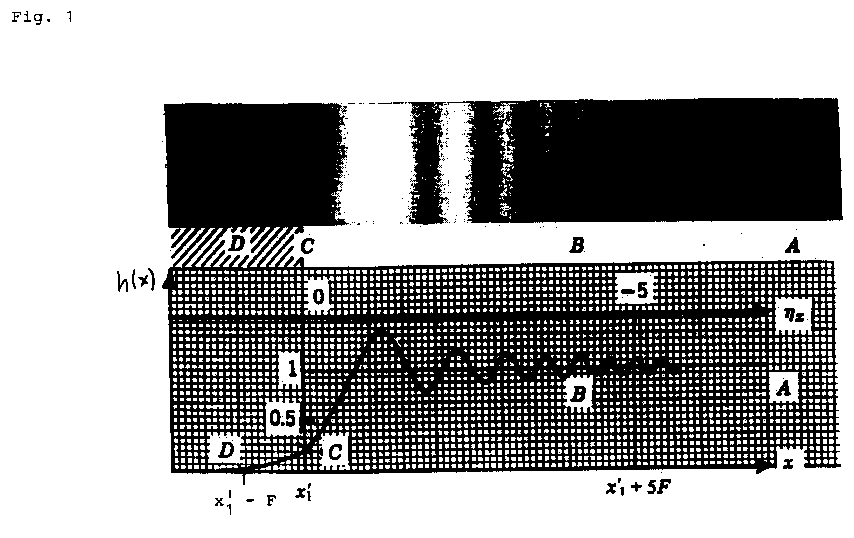

Figur 1 zeigt die Beugung von Licht an einer Kante. Aus der Helligkeitsfunktion h(x) ist zu erkennen, daß die physikalische Kante (Ort x'₁) bei etwa 25 % der Helligkeit für große Werte von x (Referenzhelligkeit) liegt. Eine Bestimmung der physikalischen Kante kann daher erfolgen, indem zunächst die Referenzhelligkeit, d. h. die maximale Helligkeit, ermittelt und darauf der Ort bestimmt wird, an dem die Helligkeit 25 % der Referenzhelligkeit beträgt. In der Praxis ist es jedoch vorteilhafter, die Bestimmung der physikalischen Kante zu kalibrieren. Zu diesem Zweck wird ein Körper mit bekannten und genau definierten Konturen in den Strahlengang eingebracht. Durch Messung der Helligkeitsfunktion kann für eine gegebene Meßanordnung die prozentuale Helligkeit an der Kante ermittelt werden. In der Regel ist bei Veränderung der Meßanordnung (Beleuchtungsstärke, Strahlengang) ein neuer Kalibrierungsprozeß notwendig. Bei Messungen an Körpern mit unbekannten Konturen wird zunächst die Helligkeitsfunktion in der Umgebung der physikalischen Kante ermittelt und aufgrund der vorher durchgeführten Kalibration ausgewertet. Bei einem einfachen Schwellenwertverfahren wird der Punkt der Kurve der Kante des Objektes zugeordnet, der nach seiner prozentualen Helligkeit bezogen auf die Referenzhelligkeit der Kante entspricht.

Bei einem aufwendigeren Auswerteverfahren wird ein größerer Teil der Helligkeitskurve aufgenommen, der z. B. von x'₁-F bis x'₁+5F reicht. Der gemessene Funktionsteil wird durch eine Spline-Funktion approximiert. Aus den Koeffizienten der Spline-Funktion wird durch Vergleich mit dem physikalischen Modell der Helligkeitsfunktion der Punkt x'₁, d. h. die physikalische Kante ermittelt.

Die Ermittlung der Helligkeitsfunktion muß zur Bestimmung des Tropfenvolumens an vielen verschiedenen Punkten des Tropfens durchgeführt werden. Sind die Konturen des Tropfens und die des angrenzenden Transferelementes ermittelt worden, so kann das Volumen des Tropfens berechnet werden. Dies kann beispielsweise auf der Grundlage des Modells eines runden oder eliptischen Tropfens erfolgen. In einem sehr einfachen Modell kann davon ausgegangen werden, daß der an dem Transferelement haftende Tropfen die Form eines Kugelsegmentes besitzt. Aus den ermittelten Konturen des Tropfens kann in diesem Fall auf die Krümmung der Kugeloberfläche und damit ihren Radius zurückgeschlossen werden. Das Volumen des Tropfens ergibt sich dann mathematisch aus dem Volumen des zugehörigen Kugelsegmentes. Bei ähnlich einfachen Modellen wird der am Transferelement haftende Tropfen als Segment eines Elipsoids betrachtet. Mit aufwendigeren computertechnischen Verfahren kann zunächst die Oberfläche des Tropfens abgerastert und aus den Stützstellen mit einer Interpolationsfunktion die Kontur des Tropfens ermittelt werden. Die eigentliche Volumenbestimmung kann daraufhin durch Auffüllen des Raumes unter der Tropfenkontur mit Polyedern erfolgen.

Bei letzterem Verfahren können ebenfalls Unebenheiten der an den Tropfen angrenzenden Fläche des Transferelementes berücksichtigt werden.

Neben diesen mathematisch aufwendigen Verfahren können technische Lösungen zur Volumenbestimmung gefunden werden, indem bekannte Volumina an das Transferelement gebracht und die resultierenden Konturen bestimmt werden. Aus solchen Messungen können Kalibrationskurven erstellt werden, mit denen die Bestimmung unbekannter Volumina möglich ist.

Nach der Volumenbestimmung wird das Transferelement mit Probetropfen möglichst umgehend in ein Analysegefäß gegeben oder eine Analyse auf anderem Wege eingeleitet. Allgemein sollte die Zeitspanne zwischen in Kontakt bringen des Transferelementes und Beginn einer Analyse möglichst kurz gehalten werden, da auf diese Weise die Menge an verdunsteter Flüssigkeit gering gehalten werden kann. Für die Genauigkeit einer Analyse ist jedoch lediglich die Zeit zwischen in Kontakt bringen des Transferelementes und Volumenbestimmung maßgeblich, da nachfolgende Konzentrationsberechnungen auf dem gemessenen Volumen basieren. Eine Verdunstung nach der Volumenbestimmung ist für Konzentrationsberechnungen in fast allen Fällen irrelevant, da die für die klinische Analyse maßgeblichen Parameter einen hohen Dampfdruck besitzen und die Stoffmenge der Analyten im Probetropfen somit konstant bleibt.

Es hat sich herausgestellt, daß bei Probevolumina von 400 nl bis 1 µl eine Vermessung innerhalb von 3 bis 5 Sekunden nach Entnahme der Probe durchgeführt werden sollte, um Fehler in der Konzentrationsbestimmung infolge Verdunstung kleiner als 3 % zu halten. Bei bekannten Raumbedingungen, insbesondere Umgebungsluftdruck, -temperatur und Raumfeuchte, kann die innerhalb einer bestimmten Zeit verdunstete Menge entweder empirisch ermittelt oder berechnet werden. Die Beschreibung einer Berechnung der Verdunstung kleiner Tropfen findet sich in J. Appl. Phys. 65(12), 15 (Autor: Clarence N. Peiss). Mit der empirisch oder rechnerisch ermittelten Verdunstungsmenge kann das erfindungsgemäß bestimmte Tropfenvolumen korrigiert werden, um die Genauigkeit einer Analyse zu erhöhen.

Ein weiterer Weg zur Erhöhung der Dosiergenauigkeit liegt darin, die Verdunstung des Probetropfens zu verringern. Dies kann durch Verringerung der Umgebungstemperatur und vor allem durch Erhöhung der Umgebungsluftfeuchte erreicht werden.

Die Erfindung umfaßt weiterhin ein System zur Dosierung von Flüssigkeiten mit folgenden Elementen:
**a)** Ein Transferelement mit mindestens einem Flüssigkeitstropfen, an dem der mindestens eine Flüssigkeitstropfen durch Adhäsions- und/oder Gravitationskräfte haftet,
**b)** eine Beleuchtungseinheit, die mindestens eine Lichtquelle besitzt und eine Anordnung aus Linsen, Spiegeln und Blenden besitzen kann,
**c)** eine Justierungsvorrichtung, die das Transferelement haltert und eine Bewegung des Transferelementes in mindestens einer Raumrichtung innerhalb des Lichtweges der Beleuchtungseinheit ermöglicht,
**d)** eine Detektionsvorrichtung, die Licht detektiert, nachdem dieses Licht das Transferelement passiert hat und die außerdem eine Anordnung aus Linsen, Spiegeln und Blenden besitzen kann,
**e)** eine Auswertevorrichtung, die aus Signalen der Detektionsvorrichtung Konturen des mindestens einen Flüssigkeitstropfens ermittelt und daraus das Volumen des Flüssigkeitstropfens berechnet,
**f)** einer Transfervorrichtung, durch die das Transferelement mit dem mindestens einen Flüssigkeitstropfen in ein Analysegefäß überführt wird.

Ein erfindungsgemäßes System besitzt eine Beleuchtungseinheit, mit der Transferelement und der anhaftende Flüssigkeitstropfen beleuchtet werden. Als Lichtquelle sind herkömmliche Lampen, z. B. Glühlampen oder Halogenlampen, geeignet. Bevorzugt werden diese Lampen so betrieben, daß Helligkeitsschwankungen vermieden werden. In einer vorteilhaften Anordnung wird durch Linsensysteme aus dem Licht der Lichtquelle ein Parallelstrahlenbündel erzeugt. Mit diesem Strahlungsbündel wird das Transferelement samt anhaftendem Tropfen beleuchtet. Mit einem zweiten Linsensystem wird ein Bild des Tropfens und des angrenzenden Transferelementes auf einen Sensor abgebildet. Eine reproduzierbare und damit besonders vorteilhafte Anordnung ergibt sich, wenn sich der Flüssigkeitstropfen im Brennpunkt des ihn abbildenden Linsensystemes befindet. Dies kann mit Hilfe einer Justierungsvorrichtung erreicht werden.

Das Bild des Tropfens wird auf einen optischen Sensor geworfen, der eine ein- oder bevorzugt zweidimensionale Auswertung der Helligkeit gestattet. Zu diesem Zweck sind sogenannte Vidikons oder Halbleiterbildwandler geeignet. Bevorzugt werden sogenannte CCD-Arrays (charge coupled devices) eingesetzt, da diese im Handel relativ preisgünstig erhältlich sind und eine hohe Auflösung des Bildes gewährleisten.

Der jeweilige Sensor ist mit einem Computersystem verbunden, das aus den Signalen der Elemente des Sensors eine ein- oder zweidimensionale Darstellung erzeugt.

Bei dem bisher beschriebenen Verfahren wird eine ein- oder zweidimensionale Projektion des Tropfens erhalten. Zur Volumenbestimmung ist jedoch die Raumstruktur des Tropfens notwendig. Daher wird der Tropfen mit dem angrenzenden Transferelement bevorzugt aus mehreren Raumrichtungen beleuchtet. Dies kann erfolgen, indem das Licht der Strahlungsquelle durch Strahlungsteiler (z. B. Prismen) aufgespalten, durch Spiegelsysteme umgelenkt und aus verschiedenen Raumrichtungen auf den Tropfen gerichtet wird. Bei einem stabförmigen Transferelement ist die Beleuchtung des Tropfens in zwei oder drei Richtungen senkrecht zur Achse des Transferelementes bevorzugt. Bei einem Tropfen, der sich auf einem ebenen Transferelement befindet, ist eine Beleuchtung parallel und senkrecht zur Ebene des Transferelementes bevorzugt.

Nachdem die Strahlungsbündel den Tropfen passiert haben, können sie direkt auf mehrere Sensoren geleitet werden oder bevorzugt durch Spiegelsysteme vereinigt und auf einen einzelnen Sensor geleitet werden. Bei Verwendung eines einzelnen Sensors ist es vorteilhaft, wenn die einzelnen Strahlungsgänge nacheinander aktiviert bzw. die jeweils restlichen Strahlungsgänge desaktiviert werden können.

Die folgenden Figuren sollen zur Verdeutlichung der Erfindung dienen:
Figur 1
   Theoretischer Verlauf der Helligkeitsfunktion bei Beugung an einer Kante
Figur 2
   Stabförmiges Transferelement mit und ohne Tropfen
Figur 3
   Vorrichtung zur optischen Volumenbestimmung mit einem stabförmigen Transferelement
Figur 4
   Vorrichtung zur optischen Volumenbestimmung mit einem flächigen Transferelement
Figur 5
   Volumenbestimmung von eliptischen Tropfen

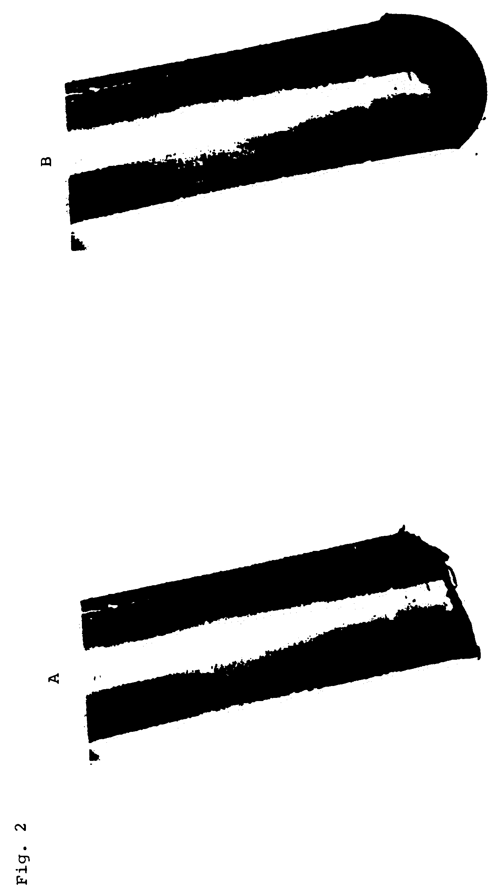

Figur 2a zeigt eine Glasfaser ohne Probenflüssigkeit. Es ist deutlich zu erkennen, daß die Stirnseite Unebenheiten aufweist. Figur 2b zeigt die gleiche Glasfaser nachdem sie mit Probenflüssigkeit in Kontakt gebracht wurde. Die anhaftende Flüssigkeit nimmt die Gestalt eines Kugelsegmentes an, jedoch ist in diesem Fall bei der Volumenbestimmung die Struktur der Abbruchkante der Glasfaser zu berücksichtigen.

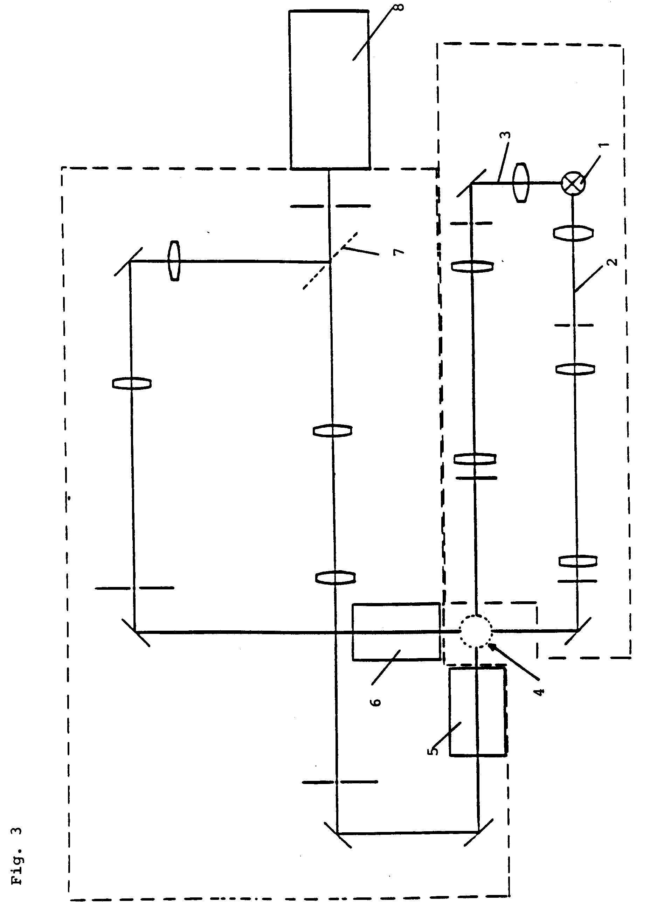

Figur 3 zeigt schematisch den Aufbau eines Systems zur Messung von Probenvolumina von Tröpfchen an einem stabförmigen Transferelement. Das Licht der Lampe (1) wird in zwei Strahlen (2) und (3) aufgeteilt und jeder Strahl über ein System aus Linsen, Blenden und Spiegeln auf die an dem Transferelement (4) haftende Probe gerichtet. Die Achse des stabförmigen Transferelementes befindet sich senkrecht zur Zeichenebene. Die Lichtstrahlen (2) und (3) bestrahlen daher den Probentropfen aus zwei senkrechten Richtungen, die ihrerseits senkrecht zur Achse des Transferelementes sind. Der beleuchtete Probentropfen befindet sich im Brennpunkt der Linsensysteme (5) und (6), durch die er so abgebildet wird, daß auf der CCD-Kamera (8) ein scharfes Bild entsteht. Die aus den Linsensystemen (5) und (6) austretenden Strahlungsbündel durchlaufen Anordnungen von Spiegeln, Blenden und Linsen. Die Teilstrahlen werden durch den halbdurchlässigen Spiegel (7) gemeinsam auf die CCD-Kamera (8) gelenkt.

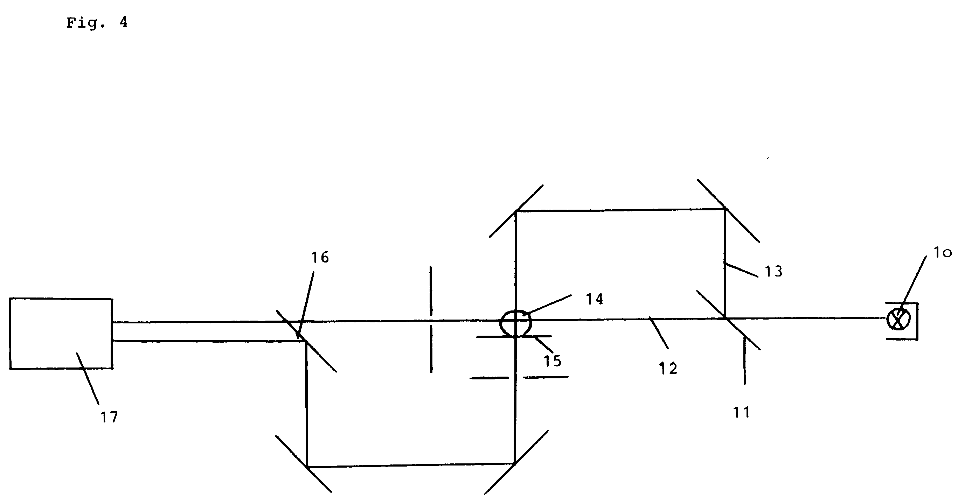

Figur 4 zeigt ein System zur Bestimmung des Volumens eines Tropfens auf einer Unterlage. Die Strahlung der Lichtquelle (10) wird durch einen Strahlungsteiler (11) in zwei Teilstrahlen (12) und (13) aufgespalten. Die Probenflüssigkeit (14) befindet sich in Form eines Tröpfchens auf einer Unterlage (15). Der Lichtstrahl (12) beleuchtet den Probentropfen von der Seite, d. h. parallel zum ebenen Probenträger (15). Der Strahl (13) beleuchtet den Tropfen (14) von oben und durchtritt die lichtdurchlässige Unterlage (15). Nachdem die Strahlen (12) und (13) den Probentropfen passiert haben, werden sie durch einen halbdurchlässigen Spiegel (16) gemeinsam auf einen Sensor (17) abgebildet.

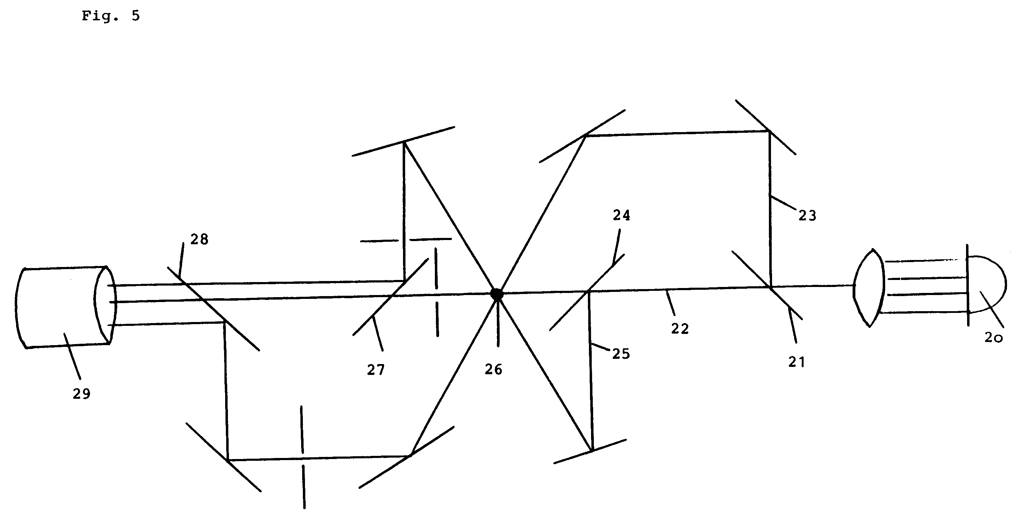

Figur 5 zeigt eine Anordnung zur Messung von Probentropfen an einem stäbchenförmigen Transferelement, die Elipsenform besitzen. Bei der Herstellung von Transferelementen durch z. B. das Zerschneiden eines Fadens, entstehen Schnittflächen, die keine ideale Kreisform aufweisen, sondern elliptische Gestalt besitzen können. Ein Probentropfen, der an solch einem Transferelement haftet, nimmt ebenfalls elliptische Gestalt an. Es ist auch möglich, daß ein Tropfen, der sich an einem kreisrunden stäbchenförmigen Transferelement befindet, eine verzerrte Gestalt annimmt. Entsprechend ist auch bei Aufbringung eines Tropfens auf ein ebenes Transferelement damit zu rechnen, daß der Tropfen keine ideale kreisförmige Gestalt besitzt, sondern eine Verzerrung aufweist. Zur Bestimmung der großen und kleinen Hauptachse einer Ellipse ist die Beleuchtung des Probentropfens in drei Richtungen, die sich in einer Ebene befinden, notwendig.

Das von der Strahlungsquelle (20) ausgehende Licht wird durch eine Sammellinse gebündelt und auf einen Strahlungsteiler (21) geleitet, der das Strahlungsbündel in die Bündel (22) und (23) zerlegt. Das Strahlungsbündel (22) wird durch den Strahlungsteiler (24) aufgespalten, so daß ein weiteres Strahlungsbündel (25) resultiert. Die Strahlen (22), (23) und (25) beleuchten ein stäbchenförmiges Transferelement (26) und den daran haftenden Probentropfen senkrecht zur Achse des Transferelementes. In Figur 5 ist die Achse des stabförmigen Transferelementes senkrecht zur Zeichnungsachse ausgerichtet. Die Strahlungsbündel befinden sich in einer Ebene (der Zeichenebene) und besitzen zueinander einen Winkel von 60°. Durch die halbdurchlässigen Spiegel (27) und (28) werden die Strahlungsbündel vereinigt und auf den Sensor (29) geleitet.

### Bezugszeichenliste

- (1): Lampe
- (2), (3): Strahlengänge
- (4): Transferelement
- (5), (6): Linsensysteme
- (7): Spiegel
- (8): CCD-Kamera
- (10): Lichtquelle
- (11): Strahlungsteiler
- (12), (13): Teilstrahlen
- (14): Probenflüssigkeit
- (15): Unterlage
- (16): halbdurchlässiger Spiegel
- (17): Sensor
- (20): Strahlungsquelle
- (21): Strahlungsteiler
- (22), (23): Strahlungsbündel
- (24): Strahlungsteiler
- (25): Strahlungsbündel
- (26): Transferelement
- (27), (28): halbdurchlässige Spiegel
- (29): Sensor

Die folgenden Beispiele sollen die Erfindung näher erläutern:

### Beispiel 1:

An einem Glasstäbchen wurde ein kleiner Glastropfen angeschmolzen, der zunächst mit einer Mikrometerschraube vermessen wurde. Darauffolgend wurde diese Anordnung in eine Meßapparatur analog Figur 3 eingebracht. Zum Vergleich verschiedener Auswerteverfahren wurden Bilder des Tropfens elektrooptisch bestimmt. Die Bilder wurden mit einem Spline-Funktions-Verfahren und mit einem Schwellwertverfahren ausgewertet. Beim Spline-Funktions-Verfahren wurde, wie weiter oben beschrieben, die Information des Beugungsbildes verwertet, während beim Schwellwertverfahren lediglich bestimmt wurde, an welchem Ort die Helligkeit 25 % der Referenzhelligkeit beträgt. Während bei der Messung mit einer Mikrometerschraube von selbst das Durchmessermaximum bestimmt wird, müssen bei den elektrooptischen Verfahren die Konturen des Tropfens in verschiedenen Schichten bestimmt werden, um den Durchmesser zu ermitteln. Tabelle I zeigt die Ergebnisse für Meßserien an zwei unterschiedlich großen Glaströpfchen. Die Bildaufnahme wurde mit einer CCD-Kamera durchgeführt, deren einzelne Elemente (Pixel) Ausmaße von 7 x 7 µm besitzen. Durch ein Interpolationsverfahren konnte die Auflösung jedoch auf Elemente mit einer Größe von ca. 1,8 x 1,8 µm vergrößert werden. Die Tabelle zeigt, daß die Durchmesser der Glaströpfchen durch die elektrooptischen Verfahren gut reproduziert werden. Lediglich Meßwert 7 fällt aus dem Rahmen, da hier mit einer sehr geringen Helligkeit gemessen wurde.

### Beispiel 2:

### Dosierung eines Probenvolumens mit einem stabförmigen Transferelement

Das Transferelement wird in einer Meßapparatur (nach Fig. 3) so angebracht, daß das Stäbchenende auf die CCD-Kamera scharf abgebildet wird. Als Transferelement kann beispielsweise ein Stück einer Glasfaser dienen oder ein Stück eines dünnen an der Außenseite beschichteten Metalldrähtchens. Mit einer entsprechenden Vorrichtung wird eine Probenküvette zum Transferelement gebracht, wobei das Stäbchen in die Probenflüssigkeit eintaucht. Über einen an der Meßapparatur angebrachten Liquid-Level-Sensor wird dabei die Eindringtiefe des Stäbchens in die Flüssigkeit überwacht. Nach dem Entfernen der Probenküvette wird das Transferelement mit anhängender Flüssigkeit sofort erfindungsgemäß optisch vermessen, um Verdunstungsfehler weitgehend zu vermeiden. Anschließend wird das Stäbchen zusammen mit der Probe in die Reaktionsküvette abgegeben und nach Berechnung des Probevolumens die entsprechende Menge an Reagenzien bzw. Pufferlösung zugegeben.

**Tabelle I**

| Nr. | Spline-Funktions-Verfahren | | Schwellwertverfahren | | Mikrometerschraube Durchmesser in µm |
|---|---|---|---|---|---|
| | Durchmesser | | Durchmesser | | |
| | in Pixel | in µm | in Pixel | in µm | |
| 1 | 205,59 | 367,11 | 206,57 | 368,86 | 368,3 |
| 2 | 205,82 | 367,52 | 206,85 | 369,36 | 368,3 |
| 3 | 206,11 | 367,80 | 207,18 | 369,71 | 368,3 |
| 4 | 206,69 | 368,64 | 207,60 | 370,26 | 368,3 |
| 5 | 205,16 | 360,25 | 206,11 | 361,95 | 359,3 |
| 6 | 205,83 | 361,43 | 206,25 | 362,19 | 359,3 |
| 7 | 197,63 | 347,03 | 192,73 | 338,42 | 359,3 |

## Patentansprüche

1. Verfahren zur Dosierung einer Flüssigkeit mit einem stabförmigen Transferelement oder einem Transferelement mit einem ebenen Flächenelement, umfassend folgende Schritte
a) Einen Kontaktierungsschritt, bei dem
- ein stabförmiges Transferelement mit einer geschlossenen Stirnfläche in die Flüssigkeit eingetaucht wird, so daß ein Tropfen der Flüssigkeit an der Stirnfläche des Transferelementes haftet
oder
- Flüssigkeit auf ein Transferelement in Form einer Unterlage mit ebenem Flächenelement aufgegeben wird, so daß ein Tropfen auf dem ebenen Flächenelement gebildet wird, und das ebene Flächenelement größer ist als der gebildete Flüssigkeitstropfen
b) einen Abbildungsschritt, bei dem der Tropfen und zumindest ein Teil des Transferelementes beleuchtet werden und durch ein optisches System mindestens ein Bild des Tropfens und eines Teiles des Transferelementes auf einem optischen Sensor abgebildet werden,
c) einen optischen Meßschritt, bei dem aus dem mindestens einen Bild, das auf den optischen Sensor abgebildet wurde, Konturen des Tropfens ermittelt werden und aus den ermittelten Konturen das Volumen des Tropfens berechnet wird,
d) einen Transferschritt, bei dem der an dem Transferelement anhaftende Tropfen in ein Analysegefäß überführt wird.

2. Verfahren gemäß Anspruch 1, bei dem der Tropfen und ein Teil des Transferelementes in mindestens zwei zueinander nicht parallelen Raumrichtungen beleuchtet und die resultierenden mindestens zwei Abbildungen des Tropfens und eines Teiles des Transferelementes zur Volumenberechnung verwendet werden.

3. Verfahren gemäß Anspruch 1 oder 2, bei dem das Transferelement ein stabförmiger Körper ist, der mindestens eine Stirnseite und eine Mantelfläche besitzt und der Tropfen an der Stirnseite des Transferelementes anhaftet.

4. Verfahren gemäß Anspruch 3, bei dem das stabförmige Transferelement eine Mantelfläche, an der die Flüssigkeit im wesentlichen nicht haftet und eine Stirnseite, an der die Flüssigkeit haftet, besitzt.

5. Verfahren gemäß Anspruch 1 oder 2, bei dem das Transferelement ein ebenes Flächenelement aufweist, das größer als der Tropfendurchmesser ist.

6. Verfahren gemäß Anspruch 5, bei dem der Randwinkel des Tropfens mit dem ebenen Flächenelement des Transferelementes größer als 90° ist.

7. Verfahren nach einem der Ansprüche 1, 3 oder 5 zur Dosierung von Probenvolumina im Bereich von 10 bis 500 nl.

8. Verfahren nach einem der Ansprüche 1, 3 oder 5, bei dem die mindestens eine Abbildung des Tropfens mit einer CCD-Kamera aufgenommen wird.

9. Verfahren nach einem der Ansprüche 1, 3 oder 5, bei dem die Konturen des Tropfens und eines Teils des Transferelementes aus der mindestens einen Abbildung durch einen Schwellenwert der Helligkeit oder aus dem Beugungsmuster mit einer Spline-Funktion bestimmt werden.

10. System zur Dosierung von Flüssigkeiten, das folgende Elemente beinhaltet:
a) Ein Transferelement, das stabförmig ist und das eine geschlossene Stirnfläche besitzt, an der ein Flüssigkeitstropfen haftet oder das ein ebenes Flächenelement in Form einer Unterlage besitzt, das größer ist als ein Flüssigkeitstropfen, auf das Flüssigkeit aufgegeben wird und an dem mindestens ein Flüssigkeitstropfen durch Adhäsions- und/oder Gravitationskräfte haftet,
b) eine Beleuchtungseinheit, die mindestens eine Lichtquelle besitzt und eine Anordnung aus Linsen, Spiegeln und Blenden besitzen kann,
c) eine Justierungsvorrichtung, die das Transferelement haltert und eine Bewegung des Transferelementes in mindestens einer Raumrichtung innerhalb des Lichtweges der Beleuchtungeinheit ermöglicht,
d) eine Detektionsvorrichtung, die Licht detektiert, nachdem dieses Licht das Transferelement passiert hat und die außerdem eine Anordnung aus Linsen, Spiegeln und Blenden besitzen kann,
e) eine Auswertevorrichtung, die aus Signalen der Detektionsvorrichtung Konturen des mindestens einen Flüssigkeitstropfens ermittelt und daraus das Volumen des Flüssigkeitstropfens berechnet.

11. System gemäß Anspruch 10, bei dem die Beleuchtungseinheit mindestens zwei Strahlungsbündel besitzt, die den am Transferelement haftenden Tropfen in nicht parallelen Raumrichtungen beleuchten.

12. System gemäß Anspruch 10 oder 11, bei dem das Transferelement ein stabförmiger Körper ist, der mindestens eine Stirnseite und eine Mantelfläche aufweist.

13. System gemäß Anspruch 10 oder 11, bei dem das Transferelement ein ebenes Flächenelement aufweist, das größer als der Tropfendurchmesser ist.

14. System gemäß Anspruch 10, bei dem die Detektionsvorrichtung eine CCD-Kamera ist, die mit einem System aus Linsen, Spiegeln und Blenden ausgestattet sein kann.

15. System gemäß Anspruch 10, bei dem die Auswertevorrichtung aus Signalen der Detektionsvorrichtung mit einem Schwellenwert- oder Spline-Funktions-Verfahren Konturen des mindestens einen Flüssigkeitstropfens ermittelt und daraus das Volumen des mindestens einen Flüssigkeitstropfens berechnet.

16. System gemäß Anspruch 10, bei dem die Justierungsvorrichtung den mindestens einen Flüssigkeitstropfen im Brennpunkt des Linsensystems positioniert und das mindestens ein Bild des mindestens einen Flüssigkeitstropfens auf einen optischen Sensor wirft.

## Claims

1. Method for dosing a liquid using a bar-shaped transfer element or a transfer element with a flat surface element comprising the following steps:
a) a contact step in which
- the closed end surface of a bar-shaped transfer element is immersed in the liquid such that a drop of the liquid adheres to the end surface of the transfer element,
or
- liquid is applied to a transfer element in the shape of a base plate with a flat surface element so that a drop is formed on the flat surface element and the flat surface element is larger than the liquid drop that has formed
b) an imaging step in which the drop and at least a part of the transfer element are illuminated and an optical system forms at least one image of the drop and a part of the transfer element on an optical sensor,
c) an optical measuring step in which contours of the drop are determined from the at least one image that was formed on the optical sensor and the volume of the drop is calculated from the contours determined in this manner,
d) a transfer step in which the drop adhering to the transfer element is transferred into an analytical vessel.

2. Method as claimed in claim 1, wherein the drop and at least a part of the transfer element are illuminated in at least two spatial directions which are not parallel to one another and wherein the resulting at least two images of the drop and a part of the transfer element are used to calculate the volume.

3. Method as claimed in claim 1 or 2, wherein the transfer element is a bar-shaped body having at least one front side and one outer side-wall surface and wherein the drop adheres to the front side of the transfer element.

4. Method as claimed in claim 3, wherein the bar-shaped transfer element has an outer side-wall surface to which the liquid essentially does not adhere and a front side to which the liquid adheres.

5. Method as claimed in claim 1 or 2, wherein the transfer element has a flat surface element which is larger than the diameter of the drop.

6. Method as claimed in claim 5, wherein the wetting angle formed between the drop and the flat surface element of the transfer element is greater than 90°.

7. Method as claimed in one of the claims 1, 3 or 5 for dosing sample volumes in the range 10 to 500 nl.

8. Method as claimed in one of the claims 1, 3 or 5, wherein the at least one image of the drop is recorded with a CCD-camera.

9. Method as claimed in one of the claims 1, 3 or 5, wherein the contours of the drop and part of the transfer element are determined from the at least one image by using a threshold value for brightness or from the diffraction pattern with the aid of a spline function.

10. System for dosing liquids comprising the following elements:
a) a transfer element which is bar-shaped and has a closed end surface to which a drop of liquid adheres or has a flat surface element in the shape of a base plate which is larger than the drop of liquid on which liquid is applied and to which at least one drop of liquid adheres due to adhesive and/or gravitational forces,
b) an illumination unit which has at least one light source and which can have an arrangement of lenses, mirrors, and diaphragms,
c) an adjusting device which holds the transfer element and allows movement of the transfer element in at least one direction in space within the light path of the illumination unit,
d) a detection device which detects the light after this light has passed through the transfer element and which can also have an arrangement of lenses, mirrors, and diaphragms,
e) an evaluation device which determines the contours of the at least one drop of liquid with the aid of the signals from the detection unit and from this calculates the volume of the drop of liquid.

11. System as claimed in claim 10, wherein the illumination unit has at least two beams of radiation which illuminate the drop adhering to the transfer element in non-parallel spatial directions.

12. System as claimed in claim 10 or 11, wherein the transfer element is a bar-shaped body having at least one front side and one outer side-wall surface.

13. System as claimed in claim 10 or 11, wherein the transfer element has a flat surface element which is larger than the diameter of the drop.

14. System as claimed in claim 10, wherein the detection device is a CCD-camera which can be equipped with a system of lenses, mirrors, and diaphragms.

15. System as claimed in claim 10, wherein the evaluation device determines the contours of the at least one drop of liquid from signals of the detection device using a threshold value method or spline function method and from this calculates the volume of the at least one drop of liquid.

16. System as claimed in claim 10, wherein the adjusting device positions the at least one drop of liquid in the focal point of the lens system and projects the at least one image of the at least one liquid drop onto an optical sensor.

## Revendications

1. Procédé pour le dosage d'un liquide avec un élément de transfert en forme de barreau ou avec un élément de transfert ayant un élément de surface plan, comportant les étapes suivantes:
a) une étape de contact, au cours de laquelle
- un élément de transfert en forme de barreau ayant une surface frontale fermée est plongé dans le liquide, de sorte qu'une goutte du liquide adhère à la surface frontale de l'élément de transfert
ou
- du liquide est déposé sur l'élément de transfert en forme de support avec un élément de surface plan, de sorte qu'une goutte se forme sur l'élément de surface plan, et l'élément de surface plan est plus grand que la goutte de liquide formée
b) une étape de formation d'image, au cours de laquelle la goutte et au moins une partie de l'élément de transfert sont éclairés, et au moins une image de la goutte et d'une partie de l'élément de transfert est formée sur un détecteur optique à l'aide d'un système optique,
c) une étape de mesure optique, au cours de laquelle les contours de la goutte sont déterminés à partir de ladite au moins une image qui a été formée sur le capteur optique, et le volume de la goutte est calculé à partir des contours déterminés,
d) une étape de transfert, au cours de laquelle la goutte adhérant à l'élément de transfert est transférée dans un récipient d'analyse.

2. Procédé selon la revendication 1, dans lequel la goutte et une partie de l'élément de transfert sont éclairées selon au moins deux directions spatiales non parallèles l'un par rapport à l'autre, et les au moins deux images résultantes de la goutte et d'une partie de l'élément de transfert sont employées pour le calcul du volume.

3. Procédé selon la revendication 1 ou 2, dans lequel l'élément de transfert est un corps en forme de barreau, qui possède au moins une face frontale et une surface-enveloppe, et la goutte adhère à la face frontale de l'élément de transfert.

4. Procédé selon la revendication 3, dans lequel l'élément de transfert en forme de barreau possède une surface-enveloppe, à laquelle le liquide n'adhère pas pour l'essentiel, et une face frontale, à laquelle adhère le liquide.

5. Procédé selon la revendication 1 ou 2, dans lequel l'élément de transfert présente un élément de surface plan qui est plus grand que le diamètre de la goutte.

6. Procédé selon la revendication 5, dans lequel l'angle de mouillage de la goutte avec l'élément de surface plan de l'élément de transfert est supérieur à 90°.

7. Procédé selon l'une quelconque des revendications 1, 3 ou 5 pour le dosage de volumes de prélèvements dans la gamme de 10 à 500 nl.

8. Procédé selon l'une quelconque des revendications 1, 3 ou 5, dans lequel ladite au moins une image de la goutte est enregistrée avec une caméra CCD.

9. Procédé selon l'une quelconque des revendications 1, 3 ou 5, dans lequel les contours de la goutte et d'une partie de l'élément de transfert sont déterminés à partir de ladite au moins une image à l'aide d'une valeur seuil de la luminosité, ou à partir du diagramme de diffraction avec une fonction spline.

10. Système pour le dosage de liquides, contenant les éléments suivants:
a) un élément de transfert qui a la forme d'un barreau et qui possède une face frontale fermée, à laquelle adhère une goutte de liquide, ou qui possède un élément de surface plan en forme de support qui est plus grand qu'une goutte de liquide, sur lequel du liquide est déposé et auquel adhère au moins une goutte de liquide par des forces d'adhérence et/ou de gravitation,
b) une unité d'éclairage qui possède au moins une source lumineuse, et qui peut posséder un montage de lentilles, de miroirs et de diaphragmes,
c) un dispositif d'ajustement qui porte l'élément de transfert, et qui permet un déplacement de l'élément de transfert dans au moins une direction spatiale à l'intérieur du chemin optique de l'unité d'éclairage,
d) un dispositif de détection qui détecte la lumière après passage de cette lumière par l'élément de transfert, et qui peut en outre posséder un montage de lentilles, de miroirs et de diaphragmes,
e) un dispositif d'évaluation qui, d'après les signaux du dispositif de détection, détermine les contours de ladite au moins une goutte de liquide, et qui calcule le volume de la goutte de liquide d'après ceux-ci.

11. Système selon la revendication 10, dans lequel l'unité d'éclairage possède au moins deux faisceaux de rayonnement qui éclairent la goutte adhérant à l'élément de transfert selon des directions spatiales non parallèles.

12. Système selon la revendication 10 ou 11, dans lequel l'élément de transfert est un corps en forme de barreau qui présente au moins une face frontale et une surface-enveloppe.

13. Système selon la revendication 10 ou 11, dans lequel l'élément de transfert présente un élément de surface plan qui est plus grand que le diamètre de la goutte.

14. Système selon la revendication 10, dans lequel le dispositif de détection est une caméra CCD qui peut être pourvue d'un système de lentilles, de miroirs et de diaphragmes.

15. Système selon la revendication 10, dans lequel le dispositif d'évaluation détermine, d'après des signaux du dispositif de détection, les contours de ladite au moins une goutte de liquide avec un procédé à valeur seuil ou à fonction spline, et qui calcule le volume de ladite au moins une goutte de liquide d'après ceux-ci.

16. Système selon la revendication 10, dans lequel le dispositif d'ajustement dispose ladite au moins une goutte de liquide au point focal du système de lentilles, et projette ladite au moins une image de ladite au moins une goutte de liquide sur un détecteur optique.
